# FASCICULE DE BREVET EUROPEEN

(11) **EP 0 484 669 B1**
(45) Date de publication et mention de la délivrance du brevet: **01.03.1995**
(21) Numéro de dépôt: 91116377.2
(22) Date de dépôt: 26.09.1991
(51) Int. Cl.: A23L 1/16

(54) **Procédé de préparation de pâtes alimentaires séchées**
Verfahren zur Herstellung von getrockneten Teigwaren
Process for making dried pasta

(30) Priorité: 08.11.1990 CH 3548/90
(43) Date de publication de la demande: 13.05.1992
(73) Titulaire: SOCIETE DES PRODUITS NESTLE S.A., 1800 Vevey (CH)
(72) Inventeur: Cuperus, Herman Jacob, CH-8700 Kuesnacht ZH (CH)

(56) Documents cités:
- EP-A- 0 445 550
- GB-A- 1 196 389
- US-A- 3 482 993
- WORLD PATENTS INDEX Section Ch, 1979 DerwentPublications Ltd., London, GB; Class D, AN 79-36012B &JP-A-54 041 341 (FUSO KAGAKU)

## Description

La présente invention a trait à un procédé de préparation de pâtes alimentaires séchées pouvant rapidement être reconstituées pour la consommation.

Il est connu de préparer des pâtes séchées à reconstitution rapide, par extrusion d'un mélange de mouture de céréale et d'eau présentant un taux de matière sèche de 70% en poids, précuisson du mélange extrudé à l'eau bouillante, jusqu'à obtention de pâtes précuites présentant un taux de matière sèche de 30%, puis séchage des pâtes précuites jusqu'à un taux de matière sèche de 90% environ, les pâtes obtenues pouvant être reconstituées rapidement par addition d'eau et passage 3-8 minutes au four à microondes.

Lors du passage à l'exploitation à l'échelle industrielle d'un tel procédé, deux problèmes qui peuvent s'avérer dissuasifs, vont se poser. Tout d'abord, la quantité d'énergie à fournir pour sécher jusqu'à un taux de matière sèche de 90% des pâtes précuites présentant un taux de matière sèche de 30% est relativement importante. D'autre part, les pertes de matière première liées à une précuisson à l'eau bouillante sont élevées, de l'ordre de 10-12% en poids.

GB-A 1196389 décrit un procédé de fabrication de pâtes alimentaires dans lequel les pâtes fraîchement extrudées sont précuites au moyen de vapeur et simultanément aspergée d'eau, au lieu d'être plongées dans l'eau bouillante. On a cependant constaté que ce type de précuisson conduit également à un taux de pertes en matières premières élevé.

La présente invention a pour but de pallier ces inconvénients et de proposer un procédé de préparation de pâtes alimentaires séchées permettant de réduire les pertes de matière première lors de la précuisson ainsi que la quantité d'énergie à fournir lors du séchage.

A cet effet, la présente invention a pour objet un procédé dans lequel on prépare un mélange comprenant un produit de mouture de céréale et de l'eau, on forme des pâtes à partir dudit mélange, on précuit lesdites pâtes à la vapeur tout en les aspergeant par intermittence d'eau très chaude à pH 5,0-5,5, de manière à obtenir des pâtes précuites présentant un taux de matière sèche de 35-45% en poids, puis on sèche les pâtes précuites.

Un avantage de ce procédé est de permettre une réduction de la quantité totale d'eau utilisée pour la précuisson, c'est-à-dire d'eau chargée en matière première, amidon essentiellement, difficilement recyclable.
Un autre avantage de ce procédé est de permettre l'obtention de pâtes précuites dont l'amidon est totalement gélatinisé et le réseau de protéines complètement formé.

Le présent procédé est particulièrement remarquable par le fait qu'il permet la préparation de pâtes à sécher totalement précuites, présentant un taux de matière sèche plus élevé d'au moins 16% et jusqu'à 50%, que celui des pâtes précuites obtenues par les procédés traditionnels, tout en assurant la conservation de leurs qualités organoleptiques.
La quantité d'énergie à fournir pour sécher les pâtes précuites selon l'invention jusqu'à un taux de matière sèche de environ 90% est inférieure de 8 à 25% à la quantité d'énergie nécessaire pour sécher des pâtes précuites de manière traditionnelle.

Dans la suite de la présente description, les pourcentages et les parties sont donnés en poids.

Afin de mettre en oeuvre le présent procédé, on prépare un mélange comprenant un produit de mouture de céréale et de l'eau.
On peut utiliser, par exemple, de la farine et/ou de la semoule, obtenues par mouture de grains de céréales telles que le blé, le riz ou le maïs.
On peut ajouter au mélange des additifs tels que des oeufs frais ou déshydratés, du sel, des épices, des aromates ou des émulsifiants.

On peut ajouter de l'eau en quantité suffisante afin d'obtenir un mélange présentant un taux de matière sèche de 65-75%.
On forme ensuite les pâtes, par exemple par extrusion du mélange dans une extrudeuse à vis ou une extrudeuse à barre rotative, ou par laminage, suivi d'un découpage afin de conférer aux pâtes la forme et les dimensions souhaitées.

Les pâtes ainsi formées sont alors précuites à la vapeur tout en étant aspergées par intermittence d'eau à pH 5,0-5,5, présentant une température de 90 -98°C, ce qui permet d'assurer l'hydratation des pâtes lors de la précuisson et l'obtention d'un produit final cuit dont l'amidon est totalement gélatinisé et le réseau de protéines complètement formé.

On a en effet constaté que si la précuisson est effectuée à la vapeur sans aspersion d'eau, l'hydratation des pâtes est insuffisante et le produit final n'est pas totalement cuit.
Si l'aspersion d'eau est effectuée en continu, l'hydratation est trop importante et l'on observe des pertes importantes de matière première par lixiviation. Enfin, si l'aspersion est effectuée par intermittence, mais avec une eau à une température inférieure à 90°C, le produit se refroidit et n'absorbe plus suffisamment d'eau pour permettre une gélatinisation complète de l'amidon.
Il est également important que la température des pâtes pendant toute l'étape de précuisson, ne soit pas inférieure à 97°C, afin de permettre une gélification complète de l'amidon et l'obtention d'un produit totalement cuit.

L'aspersion est effectuée avec une eau à pH 5,0-5,5 obtenue par exemple par addition d'acide citrique ou malique.
Il convient en effet de former des liens intermédiaires entre les fibrilles de protéines, afin de renforcer la structure des pâtes et d'obtenir des pâtes fermes après cuisson, tout en diminuant les risques de pertes de matière première.

Dans un mode particulier de mise en oeuvre du présent procédé, on peut disposer les pâtes formées sur une bande transporteuse qui défile à l'intérieur d'une enceinte étanche dans laquelle on entretient une atmosphère de vapeur à 98-100°C.
A l'intérieur de ladite enceinte, des douches peuvent être suspendues, disposées à intervalle régulier au-dessus de ladite bande transporteuse, de manière à asperger en discontinu les pâtes avec une eau très chaude, de pH 5,0-5,5.
La précuisson peut être effectuée pendant environ 4-8 minutes, de manière à obtenir des pâtes précuites, présentant un taux de matière sèche de 35-45%.

Après précuisson, on peut asperger les pâtes avec une eau à 15°C, afin de les refroidir rapidement jusqu'à environ 20°C, et ôter l'amidon qui reste éventuellement à leur surface.
Les pâtes précuites peuvent alors être séchées, par exemple dans un séchoir à air chaud à 60-80°C, par rayonnement infrarouge ou par microondes, de manière à obtenir des pâtes séchées présentant un taux de matière sèche de 88-95%.

Les pâtes alimentaires séchées obtenues par le présent procédé peuvent être reconstituées rapidement pour la consommation, par exemple par cuisson pendant 4-7 minutes dans l'eau bouillante, ou par addition d'eau froide ou tiède et passage 5-8 minutes au four à microondes, selon la taille des pâtes utilisées.

Le présent procédé de préparation de pâtes alimentaires séchées peut être mis en oeuvre en discontinu, en semi-continu ou, de préférence, en continu.

La présente invention est illustrée plus en détails dans les exemples ci-après.

### Exemple 1

On prépare un mélange comprenant 70 kg de semoule de blé dur présentant un taux de matière sèche de 14-15% et 21 litres d'eau, de manière à obtenir un mélange présentant un taux de matière sèche d'environ 30%.
On malaxe le mélange dans une extrudeuse à vis puis le mélange est poussé hors de l'extrudeuse à travers une filière d'extrusion de manière à former des pâtes en forme de spirales présentant une épaisseur de paroi de 0,6 mm.
Les pâtes ainsi formées sont disposées en une couche de environ 2 centimètres d'épaisseur, sur une bande transporteuse qui défile à l'intérieur d'une enceinte dans laquelle on entretient une atmosphère de vapeur à 98 -100°C.

A l'intérieur de ladite enceinte sont suspendues quatre douches, à une distance de 85 cm les unes des autres, qui aspergent la bande transporteuse et les pâtes qui y sont disposées, avec une eau à pH 5,2 à 93 °C.

Les pâtes restent pendant environ 6 minutes à l'intérieur de l'enceinte puis, à leur sortie, sont aspergées pendant environ 10 secondes avec une eau à 15°C, ce qui permet d'obtenir des pâtes à une température de 20° C qui présentent un taux de matière sèche de 40%. Les pâtes précuites sont alors transportées par un flux d'eau froide qui permet de les séparer, jusqu'à un tamis où elles sont égouttées.
Les pâtes sont ensuite séchées dans un séchoir à air chaud à 80°C, pendant environ 3 heures, jusqu'à obtention d'un taux de matière sèche de 90%.

Les pâtes ainsi obtenues peuvent être préparées pour la consommation par exemple par cuisson pendant environ 4 minutes dans l'eau bouillante, ou par immersion dans l'eau froide et passage environ 5 minutes au four microondes.
On obtient des pâtes présentant des qualités organoleptiques comparables à celles des pâtes obtenues de façon traditionnelle.

On mesure, en % en poids, les pertes de matière première, essentiellement d'amidon, qui se produisent lors de l'étape de précuisson.

Pour comparaison, on prépare, de manière similaire à celle décrite ci-dessus des pâtes par extrusion, précuisson dans un bain d'eau bouillante à pH 5,2 pendant 6 minutes, refroidissement par aspersion d'eau froide, transport par flux aqueux jusqu'à un tamis, égouttage et séchage dans les mêmes conditions.

On obtient les résultats suivants:
- prétraitement selon l'invention: 6 à 8% de pertes
- prétraitement dans l'eau bouillante: 10 à 12% de pertes.

Le prétraitement selon l'invention permet donc de réduire les pertes de matière première d'environ un tiers de leur valeur.

### Exemple 2

De manière similaire à celle décrite dans l'exemple 1, on prépare des pâtes en forme de spirales de 0,9 mm d'épaisseur de paroi. Les pâtes ainsi préparées sont séchées jusqu'à obtention d'un taux de matière sèche de 95%, puis mélangées avec une sauce déshydratée.
Les pâtes peuvent ensuite être reconstituées par cuisson pendant environ 7 min dans l'eau bouillante ou immersion dans l'eau froide et passage pendant environ 8 min au four microonde.
On obtient ainsi un plat préparé, constitué de pâtes et de sauce, qui présente de bonnes qualités organoleptiques.

## Revendications

1. Procédé de préparation de pâtes alimentaires séchées dans lequel on prépare un mélange comprenant un produit de mouture de céréale et de l'eau, on forme des pâtes à partir dudit mélange, on précuit lesdites pâtes à la vapeur tout en les aspergeant par intermittence d'eau portée à une température de 90-98°C et présentant un pH 5,0-5,5 de manière à obtenir des pâtes précuites présentant un taux de matière sèche de 35-45% en poids, puis on sèche les pâtes précuites.

## Claims

1. A process for the production of dried pastas in which a mixture comprising a ground cereal product and water is prepared, pastas are formed from the resulting mixture, the pastas are precooked with steam and, at the same time, are intermittently sprayed with water heated to a temperature of 90 to 98°C and having a pH of 5.0 to 5.5 to obtain precooked pastas having a dry matter content of 35 to 45% by weight, after which the precooked pastas are dried.

## Patentansprüche

1. Verfahren zur Herstellung von getrockneten Teigwaren, bei dem man eine Mischung aus einem Getreidemahlgut und Wasser herstellt, aus dieser Mischung Teigwaren formt, diese Teigwaren in Dampf vorkocht, indem man sie intermittierend mit Wasser besprüht, das auf eine Temperatur von 90-98°C erhitzt ist und ein pH von 5,0-5,5 besitzt, so daß man vorgekochte Teigwaren mit einem Trockensubstanzgehalt von 35-34 Gew.-% erhält, und dann die vorgekochten Teigwaren trocknet.
